# EUROPEAN PATENT APPLICATION

(11) **EP 4 428 680 A1**
(43) Date of publication of application: **11.09.2024**
(21) Application number: 21965118.9
(22) Date of filing: 25.11.2021
(51) Int. Cl.: G06F 8/65

(54) **UPGRADE METHOD AND APPARATUS, AND ELECTRONIC DEVICE**

(71) Applicant: Huawei Technologies Co., Ltd., Shenzhen, Guangdong 518129 (CN)
(72) Inventor: ZHANG, Heng, Shenzhen, Guangdong 518129 (CN)
(74) Representative: Isarpatent
(86) International application number: PCT/CN2021/133096
(87) International publication number: WO 2023/092382

(57) **Abstract**

Embodiments of this application provide an upgrade method and apparatus, and an electronic device, and relate to the field of the Internet-of-vehicles technologies. The method includes: A server obtains a first instruction when a software function of an in-vehicle component is faulty, where the first instruction is used to indicate an upgrade strategy of the in-vehicle component, and the upgrade strategy is associated with a software function status of the in-vehicle component. The server sends task information of an upgrade task in response to the first instruction, where the task information includes information about the upgrade strategy, and the information about the upgrade strategy is used to indicate the in-vehicle component to be upgraded. Correspondingly, after receiving the task information of the upgrade task, a vehicle may upgrade the in-vehicle component based on the upgrade strategy. In the method, the upgrade strategy of the in-vehicle component may be adjusted based on the software function status of the in-vehicle component. In this way, the in-vehicle component can still continue to be upgraded when a software function is faulty, security and reliability of upgrading of the in-vehicle component are effectively improved, and unavailability of the vehicle can be reduced, thereby facilitating normal use of the vehicle by a user.

## Description

### TECHNICAL FIELD

This application relates to the field of the Internet-of-vehicles technologies, and in particular, to an upgrade method and apparatus, and an electronic device.

### BACKGROUND

With development of the Internet-of-vehicles technologies, an over the air (over the air, OTA) technology is widely used in upgrading of an in-vehicle component. The in-vehicle component not only includes an in-vehicle communication terminal, but also includes an in-vehicle controller (for example, passive entry passive start (passive entry passive start, PEPS), a battery management system (battery management system, BMS), a motor control unit (motor control unit, MCU), and a power distribution unit (power distribution unit, PDU)). Therefore, upgrading of the in-vehicle component not only has high complexity, but also has higher security and reliability requirements.

However, in a process of upgrading the in-vehicle component, once a software function of the in-vehicle component is faulty, the in-vehicle component fails to be upgraded, and consequently the in-vehicle component is in an unavailable state. In addition, when the in-vehicle component (for example, the in-vehicle controller) related to traveling of a vehicle is in an unavailable state, the vehicle cannot be used normally. In this case, in some technical solutions, the vehicle is moved to a specified area, and technical personnel perform recovery processing on a software function status of the in-vehicle component. However, this solution is inefficient and requires a large amount of manpower and material resources.

Therefore, when the software function status of the in-vehicle component is faulty, how to continue to upgrade the in-vehicle component to improve security and reliability of the in-vehicle component upgrade and facilitate normal use of the vehicle by a user is a technical problem that needs to be resolved urgently.

### SUMMARY

Embodiments of this application provide an upgrade method and apparatus, and an electronic device, so that an in-vehicle component can still continue an upgrade task when a software function is faulty, and security and reliability of upgrading of the in-vehicle component are effectively improved, thereby facilitating normal use of a vehicle by a user.

According to a first aspect, an embodiment of this application provides an upgrade method. The method may be applied to a server or a chip disposed in a server. The method includes: obtaining a first instruction when a software function of an in-vehicle component is faulty, where the first instruction is used to indicate an upgrade strategy of the in-vehicle component, and the upgrade strategy is associated with a software function status of the in-vehicle component; and sending task information of an upgrade task in response to the first instruction, where the task information includes information about the upgrade strategy, and the information about the upgrade strategy is used to indicate the in-vehicle component to be upgraded.

It may be understood that the in-vehicle component includes but is not limited to an in-vehicle terminal, a domain controller, a sensor, and an electronic control unit (electronic control unit, ECU). Software functions of different in-vehicle components are different. For example, a software function of a power distribution unit (power distribution unit, PDU) is a power control function. For another example, a software function of a motor control unit (motor control unit, MCU) is a signal control function. For another example, a software function of a radar is a velocity measurement function, an angle measurement function, and a ranging function.

In this embodiment of this application, the software function status is associated with the upgrade strategy, and the upgrade strategy of the in-vehicle component may be adjusted based on the software function status of the in-vehicle component. For example, when a software function (for example, a communication function or a vehicle speed detection function) related to a security requirement of a vehicle runs normally, impact of faults of some software functions (for example, a vehicle high-voltage signal setting function or a flag status setting function) of the in-vehicle component that do not relate to a security requirement on an upgrade process of the in-vehicle component is ignored. In this way, the in-vehicle component can still continue to be upgraded when the software function is faulty, security and reliability of upgrading of the in-vehicle component are effectively improved, and unavailability of the vehicle can be reduced, thereby facilitating normal use of the vehicle by a user.

In a possible design, the information about the upgrade strategy includes a preset condition, and the preset condition may be used by the in-vehicle component to omit a pre-upgrade processing procedure or used by the in-vehicle component to directly enter an upgrade state.

It may be understood that a processing procedure before the in-vehicle component is upgraded includes but is not limited to: a signal control procedure, a procedure of checking mutex, and a procedure of checking a vehicle state. The signal control procedure may be, for example, at least one of settings of a power-on wake-up signal (KL15) of the in-vehicle component, a network wake-up signal of a controller area network (controller area network, CAN), and a high-voltage signal of the vehicle. The procedure of checking mutex may be, for example, a conflict check of an in-vehicle service. The procedure of checking a vehicle state may be, for example, a check of allowing refreshing flags by the vehicle and a check of a vehicle upgrade state. "The in-vehicle component directly enters an upgrade state" may be understood as that the in-vehicle component omits a pre-upgrade processing procedure of the in-vehicle component, and directly enters a state of executing the upgrade task.

In this embodiment of this application, the preset condition is related to a software function fault condition of the in-vehicle component. In other words, different software function fault conditions correspond to different preset conditions. For example, the in-vehicle component is passive entry passive start (passive entry passive start, PEPS), and a software function of the PEPS is a signal (for example, a CAN network wake-up signal and a power-on wake-up signal) control function. If the signal control function is faulty, the preset condition is that a procedure of detecting a signal control result of the in-vehicle component is omitted. For still another example, the in-vehicle component is a PDU, and a software function of the PDU is a power control function. If the power control function is faulty, the preset condition is that a procedure of detecting a power control result of the in-vehicle component is omitted.

In this design, a preset condition is set in the information about the upgrade strategy. The preset condition may be used by the in-vehicle component to omit a pre-upgrade processing procedure or used by the in-vehicle component to directly enter an upgrade state, so that the upgrade strategy can be flexibly set. In this way, the in-vehicle component can still continue an upgrade task when some software functions are faulty.

In a possible design, the server may further send a second instruction. The second instruction may be used to indicate to check a speed and a gear state of a vehicle.

In this design, the server sends the second instruction used to indicate to check the speed and the gear state of the vehicle. In this way, the vehicle can check the speed and the gear state, so that upgrading of the in-vehicle component is performed while user safety is ensured, thereby effectively improving security of upgrading of the in-vehicle component.

In a possible design, before the sending task information of an upgrade task, the upgrade method further includes: displaying risk warning information; and obtaining a first operation of the user for the risk warning information. The first operation is used to indicate that the user allows the server to deliver the task information of the upgrade task.

In this design, the server sends the task information of the upgrade task only after obtaining the user's permission to deliver the task information of the upgrade task, so that impact of a misoperation of the user on upgrading of the in-vehicle component can be effectively reduced, and upgrading of the in-vehicle component meets a user requirement.

In a possible design, the first instruction may be determined based on a user input.

In this design, the first instruction is determined based on the user input, so that upgrading of the in-vehicle component meets the user requirement. In addition, when the user finds that a software function status of the in-vehicle component is faulty, the server may be triggered in time to adjust the upgrade strategy, thereby improving upgrade efficiency of the in-vehicle component, and facilitating normal use of the vehicle by the user.

In a possible design, the server may further obtain a third instruction. If the third instruction is used to indicate that the user allows the server to deliver an upgrade package corresponding to the upgrade task, the server sends the upgrade package to the vehicle.

In this design, the server determines, according to a user instruction, whether to deliver the upgrade package. To be specific, the user may determine whether the in-vehicle component is upgraded by using a local upgrade package of the in-vehicle component, or is upgraded by using the upgrade package delivered by the server. In this way, upgrading of the in-vehicle component further meets the user requirement.

In a possible design, the server may further sign the task information of the upgrade task based on a first certificate of the vehicle, to obtain the signed task information. The signed task information may be used to verify security of the task information.

It may be understood that the first certificate may be a certificate issued by a certificate authority to the vehicle, and is used to uniquely identify a legal identity of the vehicle. The first certificate may be preconfigured in the server, or may be requested by the server from the certificate authority. This is not limited in this embodiment of this application.

In this design, the task information of the upgrade task is signed, so that the vehicle can perform signature verification on the task information of the upgrade task. In this way, a case in which a security problem occurs during upgrading of the in-vehicle component because the task information of the upgrade task is modified by others can be effectively reduced.

According to a second aspect, an embodiment of this application further provides another upgrade method. The method may be applied to a vehicle, or a chip or an in-vehicle component disposed in a vehicle. The method includes: receiving task information of an upgrade task, where the task information includes information about an upgrade strategy, and the information about the upgrade strategy is associated with a software function status of the in-vehicle component; and upgrading the in-vehicle component based on the information about the upgrade strategy.

In this embodiment of this application, after receiving the task information of the upgrade task, the vehicle or the chip or the in-vehicle component disposed in the vehicle may upgrade the in-vehicle component based on the information about the upgrade strategy in the task information. The software function status is associated with the upgrade strategy. In this way, the in-vehicle component can still continue to be upgraded when a software function is faulty, security and reliability of upgrading of the in-vehicle component are effectively improved, and unavailability of the vehicle can be reduced, thereby facilitating normal use of the vehicle by a user.

In a possible design, the information about the upgrade strategy includes a preset condition, and the preset condition may be used by the in-vehicle component to omit a pre-upgrade processing procedure or used by the in-vehicle component to directly enter an upgrade state.

In a possible design, the method further includes: receiving a second instruction. The second instruction is used to indicate to check a speed and a gear state of the vehicle.

In a possible design, a process of upgrading the in-vehicle component based on the information about the upgrade strategy may be: receive an upgrade package corresponding to the upgrade task; and upgrading the in-vehicle component based on the information about the upgrade strategy and the upgrade package.

In this design, the in-vehicle component is upgraded based on the received upgrade package, so that timeliness of updating the software function of the in-vehicle component can be effectively improved.

In a possible design, a process of upgrading the in-vehicle component based on the information about the upgrade strategy may be: upgrading the in-vehicle component based on the information about the upgrade strategy and a local upgrade package of the vehicle.

In this design, the in-vehicle component is upgraded based on the local upgrade package of the vehicle. In this way, upgrade efficiency of the in-vehicle component can be effectively improved, so that the vehicle can be restored to a normal use state more quickly, thereby facilitating normal use of the vehicle by a user.

In a possible design, before the upgrading the in-vehicle component based on the information about the upgrade strategy, the method further includes: verifying a signature of the task information based on a first certificate of the vehicle; and determining that signature verification of the task information is successful.

In this design, the in-vehicle component is upgraded only after the signature of the task information is verified, thereby effectively improving security and reliability of upgrading of the in-vehicle component.

For beneficial effects corresponding to other possible designs in the second aspect, refer to beneficial effects of corresponding designs in the first aspect. Details are not described herein again.

According to a third aspect, an embodiment of this application further provides another upgrade method, and the method may be applied to an electronic device or a chip disposed in an electronic device. For example, the electronic device may be an intelligent terminal such as a mobile phone, a computer, a tablet computer, a palmtop computer, a desktop computer, a headset, a speaker, a wearable device, a vehicle-mounted device, a virtual reality device, and an augmented reality device. The method includes: displaying risk warning information; and obtaining a first operation of the user for the risk warning information. The first operation is used to indicate that the user allows the server to deliver the task information of the upgrade task.

In this embodiment of this application, the electronic device displays the risk warning information, and obtains the first operation of the user for the risk warning information. In this way, permission information of the user for delivering the task information is determined, so that impact of a misoperation of the user on upgrading of the in-vehicle component can be effectively reduced, thereby effectively improving security and reliability of upgrading of the in-vehicle component.

In a possible design, the risk warning information is used to indicate a second operation, and the second operation includes but is not limited to at least one of the following: determining that a vehicle is in a stopped state; determining that the vehicle is in a secure area; determining that the vehicle is in an uncharged state; determining that a door of the vehicle is in a closed state; and determining that an in-vehicle diagnostic device of the vehicle has been removed. The second operation may be implemented by the user or the vehicle. This is not specifically limited in this embodiment of this application.

In this design, the risk warning information may be used to indicate the user or the vehicle to perform a corresponding operation, to ensure security of upgrading of the in-vehicle component.

According to a fourth aspect, an embodiment of this application further provides an upgrade apparatus. The apparatus may be configured to implement the method according to the first aspect. For example, the apparatus includes: a processing module, configured to obtain a first instruction when a software function of an in-vehicle component is faulty, where the first instruction is used to indicate an upgrade strategy of the in-vehicle component, and the upgrade strategy is associated with a software function status of the in-vehicle component; and a transceiver module, configured to send task information of the upgrade task in response to the first instruction, where the task information includes information about the upgrade strategy, and the information about the upgrade strategy is used to indicate the in-vehicle component to be upgraded.

In a possible design, the information about the upgrade strategy includes a preset condition, and the preset condition is used by the in-vehicle component to omit a pre-upgrade processing procedure or used by the in-vehicle component to directly enter an upgrade state.

In a possible design, the transceiver module may be further configured to send a second instruction. The second instruction is used to indicate to check a speed and a gear state of a vehicle.

In a possible design, the apparatus may further include a display module. Before the transceiver module sends the task information of the upgrade task, the display module may be configured to display risk warning information. The processing module may be further configured to obtain a first operation of the user for the risk warning information. The first operation is used to indicate that the user allows a server to deliver the task information of the upgrade task.

In a possible design, the first instruction is determined based on a user input.

In a possible design, the processing module may be further configured to obtain a third instruction. The third instruction is used to indicate that the user allows the server to deliver an upgrade package corresponding to the upgrade task. The transceiver module may be further configured to send the upgrade package to the vehicle.

In a possible design, the processing module is further configured to sign the task information of the upgrade task based on a first certificate of the vehicle, to obtain the signed task information. The signed task information may be used to verify security of the task information.

According to a fifth aspect, an embodiment of this application further provides an upgrade apparatus. The apparatus may be configured to implement the method according to the second aspect. For example, the apparatus includes: a transceiver module, configured to receive task information of an upgrade task, where the task information includes information about an upgrade strategy, and the information about the upgrade strategy is associated with a software function status of an in-vehicle component; and a processing module, configured to upgrade the in-vehicle component based on the information about the upgrade strategy.

In a possible design, the information about the upgrade strategy includes a preset condition, and the preset condition is used by the in-vehicle component to omit a pre-upgrade processing procedure or used by the in-vehicle component to directly enter an upgrade state.

In a possible design, the transceiver module may be further configured to receive a second instruction. The second instruction is used to indicate to check a speed and a gear state of the vehicle.

In a possible design, the transceiver module may be further configured to receive an upgrade package corresponding to the upgrade task. The processing module may be further configured to upgrade the in-vehicle component based on the information about the upgrade strategy and the upgrade package.

In a possible design, the processing module may be further configured to upgrade the in-vehicle component based on the information about the upgrade strategy and a local upgrade package of the vehicle.

In a possible design, the processing module may be further configured to verify a signature of the task information based on a first certificate of the vehicle, and upgrade the in-vehicle component based on the information about the upgrade strategy only when it is determined that signature verification of the task information is successful.

According to a sixth aspect, an embodiment of this application further provides an electronic device, and the electronic device may be configured to implement the method according to the third aspect. For example, the electronic device includes: a display module, configured to display risk warning information; and an obtaining module, configured to obtain a first operation of a user for the risk warning information. The first operation is used to indicate that the user allows a cloud to deliver task information of an upgrade task.

In a possible design, the risk warning information is used to indicate a second operation, and the second operation includes at least one of the following: determining that a vehicle is in a stopped state; determining that the vehicle is in a secure area; determining that the vehicle is in an uncharged state; determining that a door of the vehicle is in a closed state; and determining that an in-vehicle diagnostic device of the vehicle has been removed.

According to a seventh aspect, an embodiment of this application further provides a vehicle. For example, the vehicle includes a memory and a processor. The memory is configured to store a computer program. The processor is configured to execute the computing program stored in the memory, to implement the upgrade method according to any one of the second aspect or the possible designs of the second aspect.

According to an eighth aspect, an embodiment of this application further provides a server. For example, the server includes a memory and a processor. The memory is configured to store a computer program. The processor is configured to execute the computing program stored in the memory, to implement the upgrade method according to any one of the first aspect or the possible designs of the first aspect.

In a possible design, the server may be a single server or a server cluster including a plurality of sub-servers. When the server is the server cluster including the plurality of sub-servers, the plurality of sub-servers may be configured to jointly perform the upgrade method according to any one of the first aspect or the possible designs of the first aspect.

According to a ninth aspect, an embodiment of this application further provides a computer storage medium. The computer storage medium stores a computer program. When the computer program is run, the upgrade method according to any one of the first aspect or the possible designs of the first aspect is implemented, or the upgrade method according to any one of the second aspect or the possible designs of the second aspect is implemented, or the upgrade method according to any one of the third aspect or the possible designs of the third aspect is implemented.

According to a tenth aspect, an embodiment of this application provides a chip system. The chip system includes at least one processor. When program instructions are executed in the at least one processor, the upgrade method according to any one of the first aspect or the possible designs of the first aspect is implemented, or the upgrade method according to any one of the second aspect or the possible designs of the second aspect is implemented, or the upgrade method according to any one of the third aspect or the possible designs of the third aspect is implemented.

In a possible design, the chip system may further include a communication interface, and the communication interface is configured to input or output information.

In a possible design, the chip system may further include a memory. The memory may be coupled to the processor by using the communication interface, and is configured to store the foregoing instructions, so that the processor reads, through the communication interface, the instructions stored in the memory.

In a possible design, the processor may be a processing circuit. This is not limited in this application.

According to an eleventh aspect, an embodiment of this application further provides a computer program product. When the computer program product is run on the apparatus, the apparatus may perform the upgrade method according to any one of the first aspect and the optional designs of the first aspect, or perform the upgrade method according to any one of the second aspect and the possible designs of the second aspect, or perform the upgrade method according to any one of the third aspect and the possible designs of the third aspect.

For beneficial effects of the fourth aspect to the eleventh aspect, refer to descriptions of beneficial effects of the first aspect to the third aspect. Details are not described herein again.

### BRIEF DESCRIPTION OF DRAWINGS

FIG. 1 is a schematic diagram of a system architecture according to an embodiment of this application;
FIG. 2 is a schematic diagram of another system architecture according to an embodiment of this application;
FIG. 3 is a schematic diagram of a scenario to which an embodiment of this application is applicable;
FIG. 4 is a schematic flowchart of an upgrade method according to an embodiment of this application;
FIG. 5A is a schematic diagram 1 of an interface according to an embodiment of this application;
FIG. 5B is a schematic diagram 2 of an interface according to an embodiment of this application;
FIG. 6 is a schematic flowchart of upgrading an in-vehicle component by a vehicle according to an embodiment of this application;
FIG. 7 is a schematic diagram of a secure interaction scenario according to an embodiment of this application;

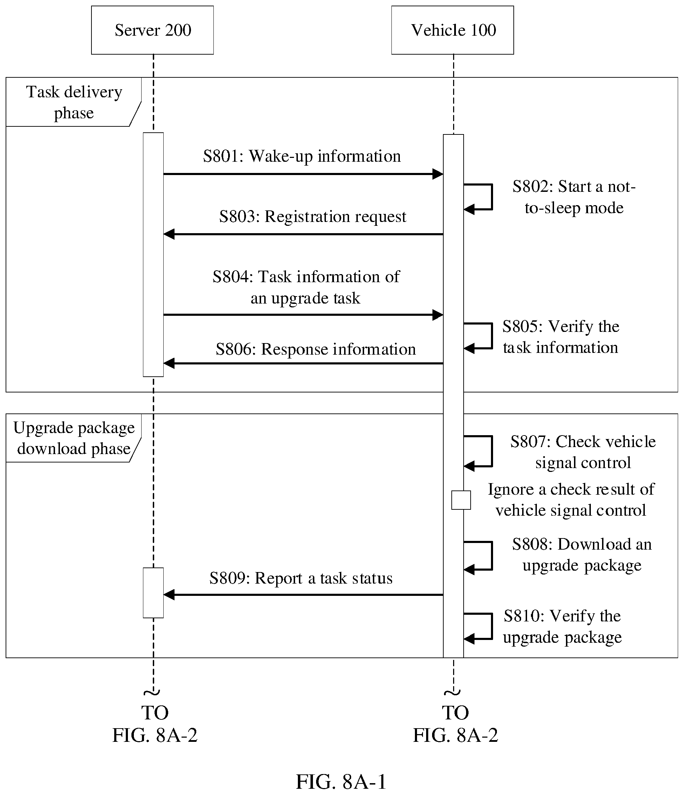

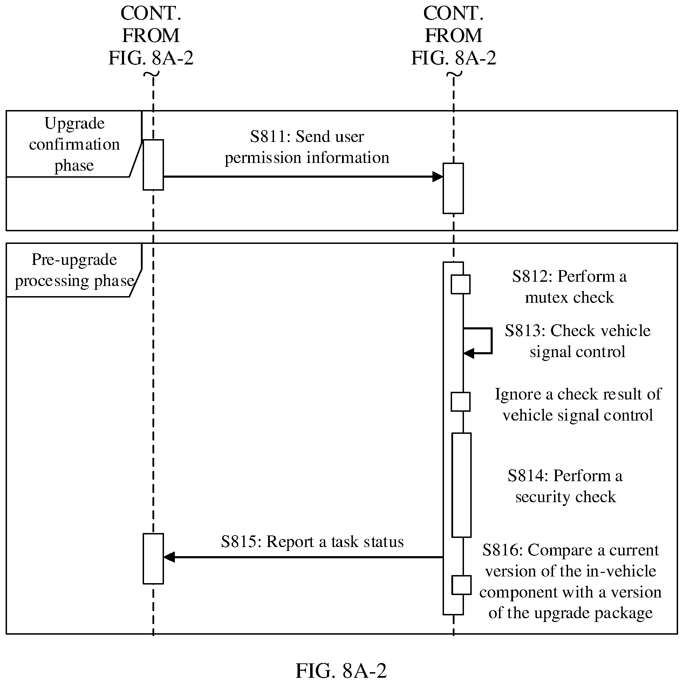

FIG. 8A-1 and FIG. 8A-2 are a schematic flowchart 1 of another upgrade method according to an embodiment of this application;

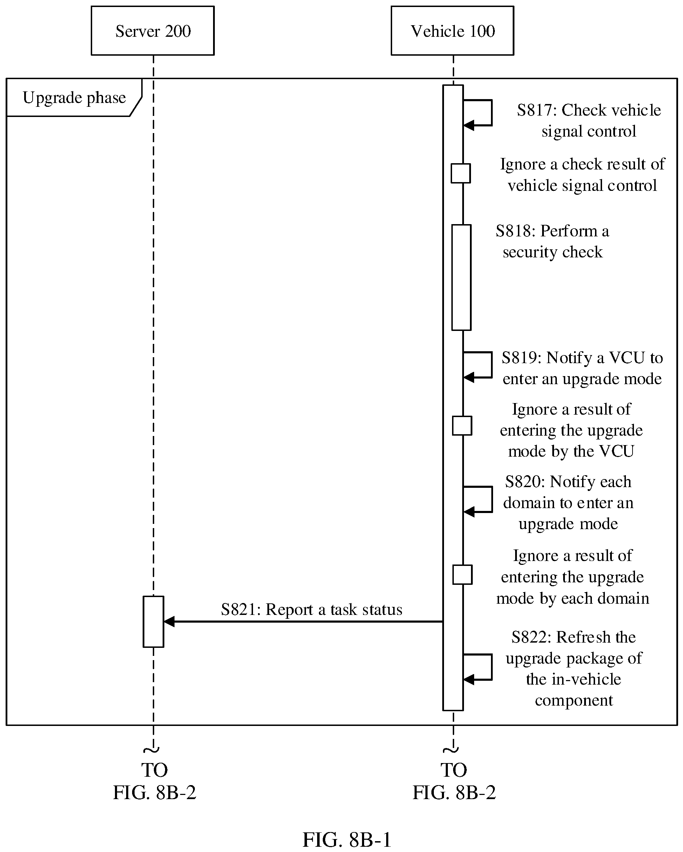

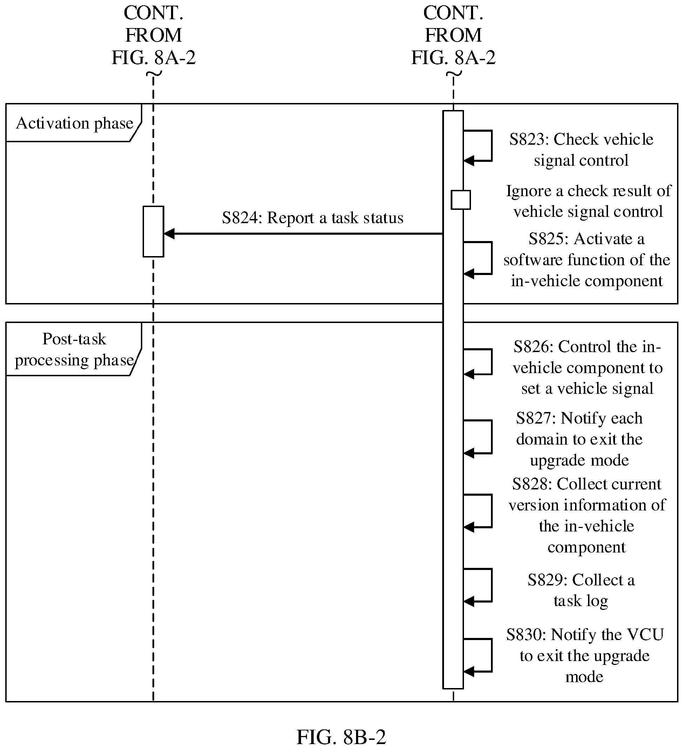

FIG. 8B-1 and FIG. 8B-2 are a schematic flowchart 2 of another upgrade method according to an embodiment of this application;

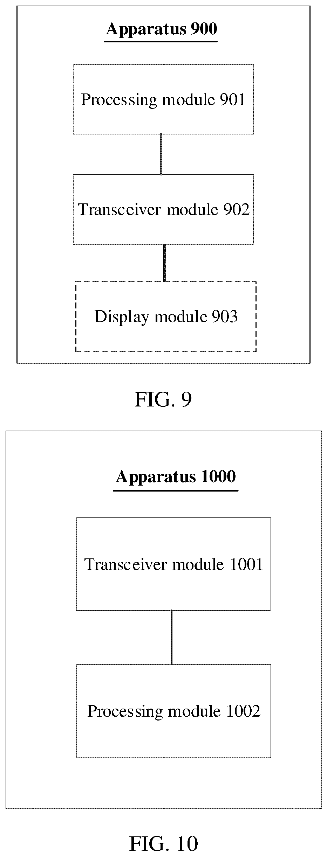

FIG. 9 is a schematic diagram of a structure of an upgrade apparatus according to an embodiment of this application;
FIG. 10 is a schematic diagram of a structure of another upgrade apparatus according to an embodiment of this application; and

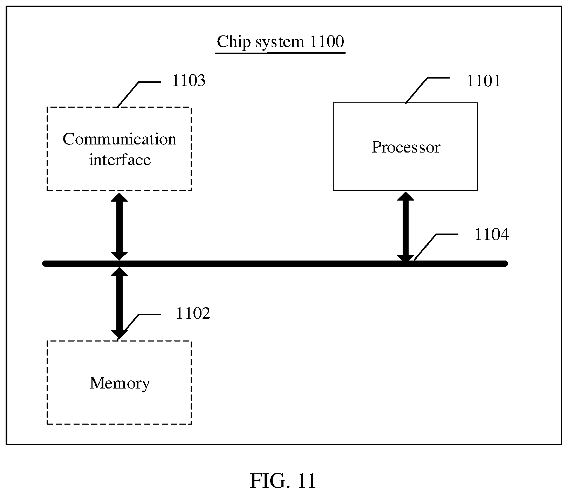

FIG. 11 is a schematic diagram of a structure of a chip system according to an embodiment of this application.

### DESCRIPTION OF EMBODIMENTS

First, some terms in embodiments of this application are explained and described, to facilitate understanding of a person skilled in the art.

(1) In-vehicle components are various components configured to implement vehicle functions. For example, the in-vehicle component may be, for example, any one of an in-vehicle terminal, a domain controller, a sensor, and an electronic control unit (electronic control unit, ECU). Software functions of different in-vehicle components are different. For example, a software function of a power distribution unit (power distribution unit, PDU) is a power control function. For another example, a software function of a motor control unit (motor control unit, MCU) is a signal control function. For another example, a software function of a radar is a signal control function. There may be one or more in-vehicle components in embodiments of this application.

(2) A certificate (certificate) means a digital certificate, which is a file digitally signed by a certificate authority (certificate authority, CA) and contains a public key and information about a public key owner. The certificate is used for identity authentication between communication parties. The certificate generally includes information such as a certificate version number (version), a serial number (serial number), a signature algorithm identifier (signature), an issuer name (issuer), subject public key information (subject public key info), and validity (validity). The certificate may further include an issuer identifier (issuer unique identifier), a subject identifier (subject unique identifier), and other extension information (extensions). The certificate in embodiments of this application may be used to sign information of a sender, so that a receiver can verify the signed information.

(3) Signing may be understood as a process of identifying to-be-transmitted information by using a digital certificate. The to-be-transmitted information in embodiments of this application may be task information of an upgrade task, or may be an upgrade package corresponding to an upgrade task.

(4) In embodiments of this application, an upgrade device may be understood as a device disposed in a vehicle for at least upgrading an in-vehicle component and managing an upgrade package of an upgrade task. The upgrade device may be, for example, a telematics box (telematics box, T-Box) or a gateway device (gateway, GW). This is not specifically limited in this embodiment of this application.

(5) In embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following" or similar expressions thereof refer to any combination of these items, including any combination of single items or a plurality of items. For example, at least one of a, b, and c may represent a, b, c, a and b, a and c, b and c, or a, b, and c, where a, b, and c may be singular or plural.

In addition, it should be understood that in description of this application, terms such as "first" and "second" are merely used for distinguishing and description, but should not be understood as indicating or implying relative importance, or should not be understood as indicating or implying a sequence.

Embodiments of this application provide an upgrade method and apparatus, and an electronic device. The method may be applied to a server and a vehicle. In the method, a first instruction may be obtained when a software function of an in-vehicle component is faulty, and task information of an upgrade task is sent in response to the first instruction. The first instruction is used to indicate an upgrade strategy of the in-vehicle component, and the upgrade strategy is associated with a software function status of the in-vehicle component. The task information includes information about the upgrade strategy, and the information about the upgrade strategy is used to indicate the in-vehicle component to be upgraded. Correspondingly, the vehicle receives the task information corresponding to the upgrade task, and upgrades the in-vehicle component based on the information about the upgrade strategy in the task information. In the method, the software function status is associated with the upgrade strategy, and the server may adjust the upgrade strategy of the in-vehicle component based on the software function status of the in-vehicle component. For example, when a software function (for example, a communication function or a vehicle speed detection function) related to a security requirement of a vehicle runs normally, impact of faults of some software functions (for example, a vehicle high-voltage signal setting function or a flag status setting function) of the in-vehicle component that do not relate to a security requirement on an upgrade process of the in-vehicle component is ignored. In this way, the in-vehicle component can still continue to be upgraded when the software function is faulty, security and reliability of upgrading of the in-vehicle component are effectively improved, and unavailability of the vehicle is reduced, thereby facilitating normal use of the vehicle by a user.

With reference to accompanying drawings, the following describes a system architecture to which an embodiment of this application is applicable.

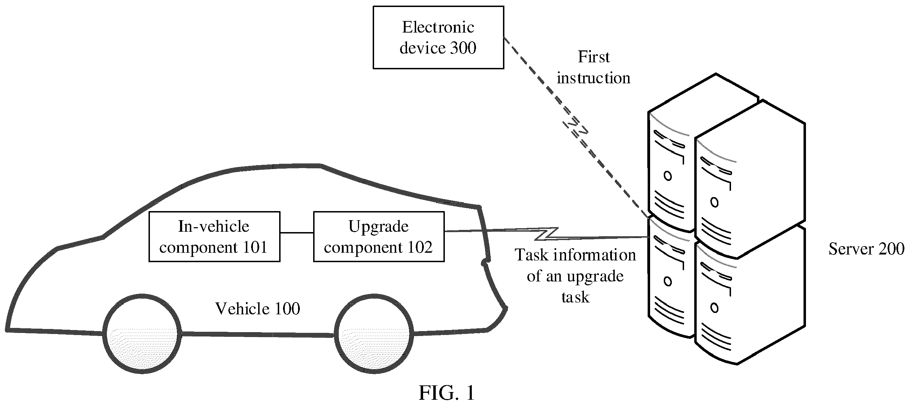

FIG. 1 shows a system architecture to which an embodiment of this application is applicable. The system shown in FIG. 1 includes a vehicle 100 and a server 200.

It may be understood that the server 200 may establish a communication connection to the vehicle 100 through a conventional internet protocol (internet protocol, IP) network, to implement communication interaction. Alternatively, the server 200 may establish a communication connection to the vehicle 100 through a mobile communication network (including an access network and a core network), to implement communication interaction. This is not limited in this embodiment of this application.

The server 200 may communicate and interact with the vehicle 100. In a possible implementation, the server 200 may obtain the first instruction when the software function of the in-vehicle component in the vehicle 100 is faulty, and send the task information of the upgrade task to the vehicle 100 in response to the first instruction. The first instruction may be used to indicate the upgrade strategy of the in-vehicle component, and the upgrade strategy is associated with the software function status of the in-vehicle component. Correspondingly, the task information includes information about the upgrade strategy, and the information about the upgrade strategy is used to indicate the in-vehicle component to be upgraded. In this way, the vehicle 100 receives the task information of the upgrade task, and may upgrade the in-vehicle component based on the information about the upgrade strategy in the task information. For example, when a vehicle high-voltage signal setting function and a flag status setting function of the in-vehicle component are faulty, the server 200 may obtain the first instruction, adjust the upgrade strategy of the in-vehicle component based on the first instruction, and send the task information that carries the upgrade strategy to the vehicle 100, so that the vehicle 100 can upgrade the in-vehicle component based on an adjusted upgrade strategy. In this way, the in-vehicle component can still continue to be upgraded when a software function is faulty, security and reliability of upgrading of the in-vehicle component are effectively improved, and unavailability of the vehicle 100 can be reduced, thereby facilitating normal use of the vehicle 100 by a user.

Further, the vehicle 100 includes an in-vehicle component 101 and an upgrade component 102. In this way, the server 200 may establish a communication connection to the upgrade component 102, and send the task information of the upgrade task to the upgrade component 102, so that the upgrade component 102 may upgrade the in-vehicle component 101 based on the information about the upgrade strategy in the task information. The upgrade component 102 may be, for example, a T-BOX.

Optionally, the system may further include an electronic device 300. The server 200 may communicate and interact with the electronic device 300. Similarly, the server 200 may establish a communication connection to the electronic device 300 through a conventional IP network, to implement communication interaction. Alternatively, the server 200 may establish a communication connection to the electronic device 300 through a mobile communication network (including an access network and a core network), to implement communication interaction. This is not limited in this embodiment of this application.

It may be understood that the server 200 obtains the first instruction in a plurality of implementations, including but not limited to the following:

Implementation 1: The electronic device 300 obtains a user input, converts the user input into the first instruction, and sends the first instruction to the server 200. Correspondingly, the server 200 receives the first instruction. In this way, the server 200 may obtain the first instruction by using the electronic device 300, so that the user can remotely control upgrading of the in-vehicle component, thereby effectively improving user experience.

Implementation 2: The server 200 obtains a user input, and converts the user input into the first instruction. In this way, the server 200 can quickly obtain the first instruction, thereby effectively improving upgrade efficiency of the in-vehicle component.

It should be noted that the architecture shown in FIG. 1 may be applied to a plurality of communication scenarios, for example, a fifth generation (The 5th Generation, 5G) communication system, a future sixth generation communication system and evolved other communication systems, a long-term evolution (Long Term Evolution, LTE) communication system, vehicle to everything (vehicle to everything, V2X), long-term evolution-vehicle (LTE-vehicle, LTE-V), vehicle to vehicle (vehicle to vehicle, V2V), internet of vehicles, machine type communication (Machine Type Communications, MTC), internet of things (internet of things, IoT), long-term evolution machine to machine (LTE-machine to machine, LTE-M), and machine to machine (machine to machine, M2M). This is not limited in embodiments of this application.

It should be noted that the server 200 in FIG. 1 may be a cloud server or a local server. This is not limited in this embodiment of this application. The electronic device 300 may be any one of intelligent terminals such as a mobile phone, a computer, a tablet computer, a palmtop computer, a desktop computer, a headset, a speaker, a wearable device, a vehicle-mounted device, a virtual reality device, and an augmented reality device. This is not limited in this embodiment of this application.

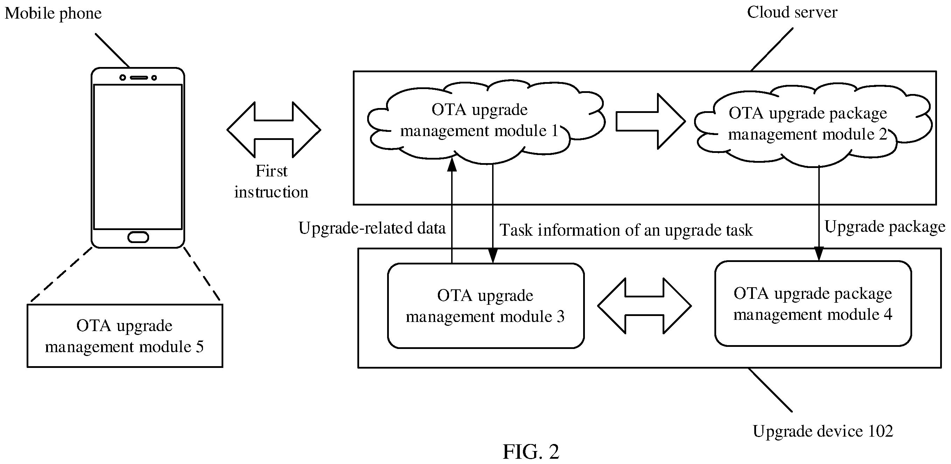

FIG. 2 shows another possible system architecture to which an embodiment of this application is applicable. In FIG. 2, a cloud server is used as an example of the server 200, a mobile phone is used as an example of the electronic device 300, and the upgrade device 102 is used as an example of a device for implementing upgrading of the in-vehicle component.

The cloud server includes an over the air (over the air, OTA) upgrade management module 1 and an OTA upgrade package management module 2. The OTA upgrade management module 1 may be configured to create an OTA upgrade task, manage the upgrade task, and deliver task information of the upgrade task. The OTA upgrade package management module 2 may be configured to manage an upgrade package corresponding to the upgrade task, and may provide a corresponding upgrade package for the upgrade device 102.

The upgrade device 102 includes an OTA upgrade management module 3 and an OTA upgrade package management module 4. The OTA upgrade management module 3 is configured to communicate and interact with the OTA upgrade management module 1, receive the OTA upgrade task, manage the upgrade task, and report upgrade-related data (for example, a software function status, an upgrade progress, and upgrade abnormality information of the in-vehicle component) to the OTA upgrade management module 1. The OTA upgrade package management module 4 may be configured to communicate and interact with the OTA upgrade package management module 2, to obtain an upgrade package corresponding to the upgrade task, and manage upgrade packages of all in-vehicle components.

The mobile phone includes an OTA upgrade management module 5. The OTA upgrade management module 5 may be configured to perform corresponding conversion processing on a user input, and communicate and interact with the OTA upgrade management module 1. In a possible implementation, the OTA upgrade management module 5 may obtain a user input, convert the user input into the first instruction, and send the first instruction to the OTA upgrade management module 1. In this way, after receiving the first instruction, the OTA upgrade management module 1 may send task information of an upgrade task to the OTA upgrade management module 3 in response to the first instruction, so that the OTA upgrade management module 3 may upgrade, based on the task information, the in-vehicle component associated with the task information.

It should be noted that in this embodiment of this application, a software function of the in-vehicle component may be faulty for a plurality of reasons, for example, an abnormality of a related in-vehicle component of the in-vehicle component, an abnormal operation of an OTA upgrade device, or damage of a software function of the in-vehicle component. Therefore, the upgrade method provided in this embodiment of this application is applicable to a plurality of scenarios, including but not limited to the following:

Scenario 1: A second in-vehicle component associated with a first in-vehicle component is abnormal, and consequently the first in-vehicle component cannot be upgraded normally.

In the scenario 1, when the first in-vehicle component is processing an upgrade task, if the second in-vehicle component associated with the first in-vehicle component is faulty, the upgrade task of the first in-vehicle component is interrupted, and a software function of the first in-vehicle component is faulty. In addition, after the fault of the second in-vehicle component is resolved, even if the OTA upgrade device restarts the upgrade task, the software function of the first in-vehicle component is still in a faulty state (namely, an unavailable state), and a procedure related to the upgrade task (for example, setting a related control signal) cannot be implemented. Consequently, the OTA upgrade device still cannot implement the upgrade task of the first in-vehicle component.

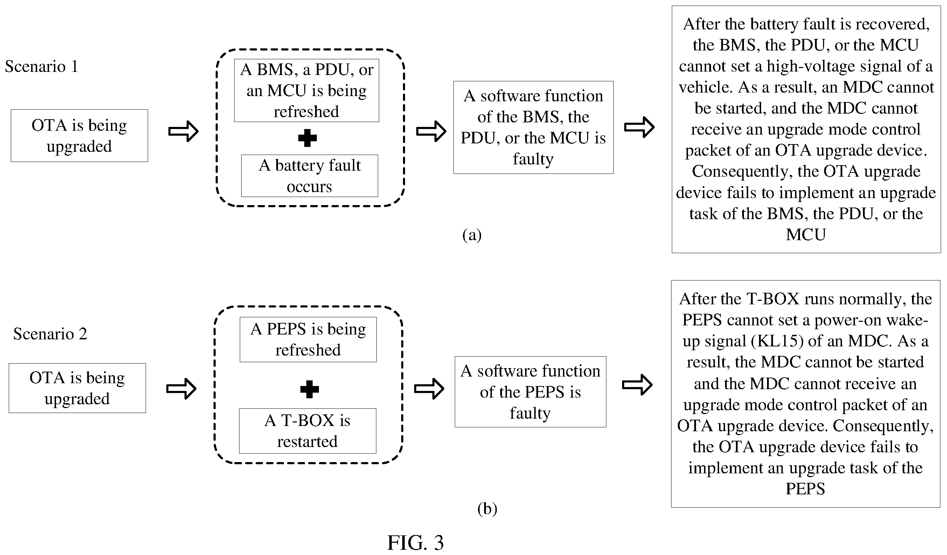

For example, refer to (a) in FIG. 3. Any in-vehicle component of a BMS, an MCU, and a PDU is used an example of the first in-vehicle component, and a battery of the vehicle 100 is used an example of the second in-vehicle component. For example, when the BMS is processing an upgrade task (for example, refreshing an upgrade package), if a battery fault (for example, power-off or insufficient power) occurs, a software function of the BMS becomes faulty, causing interruption of the upgrade task of the BMS. In addition, after the battery fault is recovered, even if the OTA upgrade device restarts the upgrade task, the BMS cannot set a high-voltage signal of the vehicle because the software function of the BMS is still in a faulty state. As a result, an MDC cannot be started, and the MDC cannot receive an upgrade mode control packet of the OTA upgrade device. Consequently, the OTA upgrade device cannot implement the upgrade task of the BMS.

Similarly, when the MCU is processing an upgrade task (for example, refreshing an upgrade package), if a battery fault (for example, power-off or insufficient power) occurs, a software function of the MCU becomes faulty, causing interruption of the upgrade task of the MCU. In addition, after the battery fault is recovered, even if the OTA upgrade device restarts the upgrade task, the MCU cannot set a high-voltage signal of the vehicle because the software function of the MCU is still in a faulty state. As a result, an MDC cannot be started, and the MDC cannot receive an upgrade mode control packet of the OTA upgrade device. Consequently, the OTA upgrade device cannot implement the upgrade task of the MCU.

Similarly, when the PDU is processing an upgrade task (for example, refreshing an upgrade package), if a battery fault (for example, power-off or insufficient power) occurs, a software function of the PDU becomes faulty, causing interruption of the upgrade task of the PDU. In addition, after the battery fault is recovered, even if the OTA upgrade device restarts the upgrade task, the PDU cannot set a high-voltage signal of the vehicle because the software function of the PDU is still in a faulty state. As a result, an MDC cannot be started, and the MDC cannot receive an upgrade mode control packet of the OTA upgrade device. Consequently, the OTA upgrade device cannot implement the upgrade task of the PDU.

Scenario 2: An abnormal operation occurs on the OTA upgrade device, and consequently the first in-vehicle component cannot be upgraded normally.

In the scenario 2, when the first in-vehicle component is processing an upgrade task, if an abnormal operation (for example, restarting) occurs on the OTA upgrade device, a software function of the first in-vehicle component becomes faulty, causing interruption of the upgrade task of the first in-vehicle component. Even if the OTA upgrade device runs normally, the first in-vehicle component is still in a faulty state, and a procedure related to the upgrade task (for example, setting a related control signal) cannot be implemented. Consequently, the OTA upgrade device cannot implement the upgrade task of the first in-vehicle component.

For example, refer to (b) in FIG. 3. A T-BOX is used as an example of the OTA upgrade device and PEPS is used as an example of the first in-vehicle component. When the PEPS is processing an upgrade task (for example, refreshing an upgrade package), the T-BOX is restarted, and a software function of the PEPS becomes faulty, causing interruption of the upgrade task of the PEPS. Even if the T-BOX runs normally, the software function of the PEPS is still in a faulty state, and the PEPS cannot set a power-on wake-up signal (KL15) of a multi-domain controller (multi domain controller, MDC). As a result, the MDC cannot be started and the MDC cannot receive an upgrade mode control packet of the T-BOX. Consequently, the T-BOX cannot implement the upgrade task of the PEPS.

Scenario 3: The software function of the first in-vehicle component is faulty, and consequently the first in-vehicle component cannot be upgraded normally.

In the scenario 3, when the first in-vehicle component performs an upgrade task (for example, refreshing an upgrade package or loading an upgrade package), if the software function of the first in-vehicle component becomes faulty for a reason of the first in-vehicle component (for example, a chip is damaged), the upgrade task of the first in-vehicle component is interrupted.

For example, the first in-vehicle component is the BMS. A chip of the BMS is damaged, and the BMS cannot set a high-voltage signal of the vehicle because the software function of the BMS is faulty. As a result, an MDC cannot be started, and the MDC cannot receive an upgrade mode control packet of the OTA upgrade device. Consequently, the OTA upgrade device cannot implement the upgrade task of the BMS.

According to the method provided in this embodiment of this application, an upgrade strategy of the in-vehicle component may be adjusted based on a software function status of the in-vehicle component. Therefore, according to the method provided in this embodiment of this application, the first in-vehicle component in the foregoing scenario 1, scenario 2, and scenario 3 can still continue to perform an upgrade task when a software function is faulty. In addition, the software function status is associated with the upgrade strategy, so that security and reliability of upgrading of the in-vehicle component can be effectively improved, and unavailability of the vehicle can be reduced, thereby facilitating normal use of the vehicle by a user.

The following describes the upgrade method provided in this embodiment of this application with reference to specific accompanying drawings.

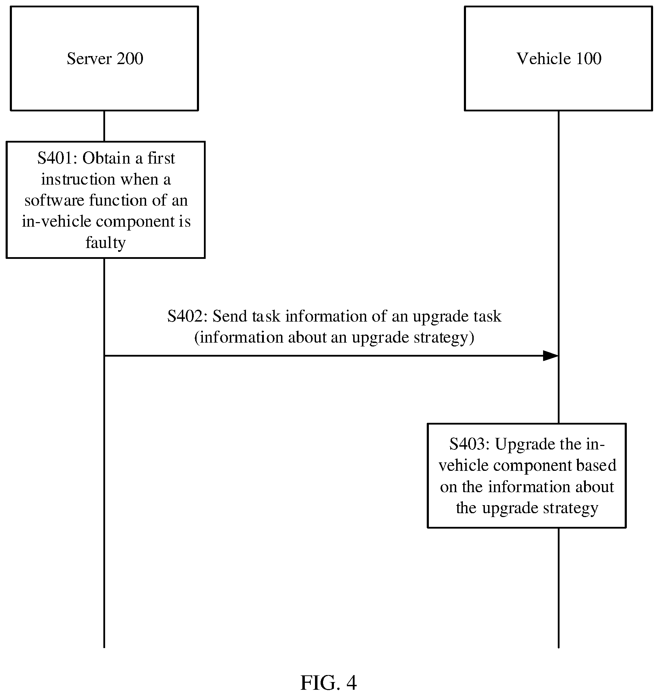

FIG. 4 is a schematic flowchart of an upgrade method according to an embodiment of this application. The method is applicable to the system architecture shown in FIG. 1. A server 200 and a vehicle 100 are taken as an example of the execution body to perform the method. The method includes the following steps.

S401: The server 200 obtains a first instruction when a software function of an in-vehicle component is faulty.

It may be understood that the in-vehicle component includes but is not limited to an in-vehicle terminal, a domain controller, a sensor, and an ECU control unit. There may be one or more in-vehicle components in this embodiment of this application. For example, the in-vehicle component may be PEPS, or may be a BMS, an MCU, and a PDU. This is not specifically limited in this embodiment of this application.

In this embodiment of this application, "a software function of an in-vehicle component is faulty" may be understood as that the software function of the in-vehicle component is in an unavailable state. In a possible implementation, the server 200 may request a diagnosis status of the in-vehicle component from the vehicle 100 at a preset time interval, determine, based on the diagnosis status, whether the software function of the in-vehicle component is faulty, and obtain the first instruction when the software function of the in-vehicle component is faulty. In another possible implementation, the server 200 may receive, at a preset time interval, a diagnosis status of the in-vehicle component actively reported by the vehicle 100, determine, based on the diagnosis status, whether the software function of the in-vehicle component is faulty, and obtain the first instruction when the software function of the in-vehicle component is faulty.

It may be understood that software functions of different in-vehicle components may be the same or different. For example, both the PDU and the MCU have a function of setting a high-voltage signal. For another example, a software function of the PDU may further be a power control function, and a software function of a radar is a velocity measurement function, an angle measurement function, and a ranging function.

The first instruction may be used to indicate the upgrade strategy of the in-vehicle component, and the upgrade strategy is associated with the software function status of the in-vehicle component. In other words, the server 200 may adjust the upgrade strategy of the in-vehicle component in response to the first instruction based on the software function status of the in-vehicle component. For example, the in-vehicle component is the PEPS. A software function of the PEPS is a vehicle high-voltage signal setting function. When the vehicle high-voltage signal setting function is faulty, the server 200 may adjust an upgrade strategy of the PEPS to omit a procedure of detecting a vehicle high-voltage signal, and directly enter an upgrade state. For another example, the in-vehicle component is the PDU. A software function of the PDU is a power control function. When the power control function is faulty, the server 200 may adjust an upgrade strategy of the PDU to omit a procedure of detecting an MDC power-on wake-up state, and directly enter an upgrade state. For another example, the in-vehicle component is the BMS. A software function of the BMS is a battery management function. When the battery management function is faulty, the server 200 may adjust an upgrade strategy of the BMS to omit a procedure of detecting power, and directly enter an upgrade state. For another example, the in-vehicle component is the MCU. A software function of the MCU is a motor signal control function. When the motor signal control function is faulty, the server 200 may adjust an upgrade strategy of the PDU to omit a procedure of detecting a motor signal, and directly enter an upgrade state. In this way, the in-vehicle component can still continue to be upgraded when a software function is faulty, security and reliability of upgrading of the in-vehicle component are effectively improved, and unavailability of the vehicle 100 can be reduced, thereby facilitating normal use of the vehicle 100 by a user.

In this embodiment of this application, the first instruction may be determined based on a user input. The first instruction is determined based on the user input in a plurality of implementations, including but not limited to the following.

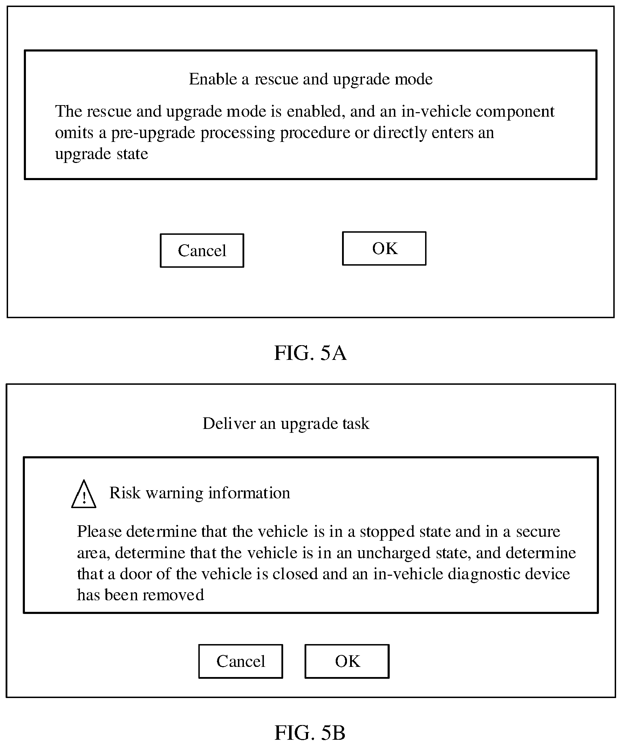

Implementation 1: When determining that the software function of the in-vehicle component is faulty, the server 200 may control an electronic device 300 to display a user interface shown in FIG. 5A, obtain a user input (for example, a tap operation of a user for an "OK" button) through the user interface, convert the user input into a first instruction, and send the first instruction to the server 200. The server 200 receives the first instruction. In this way, the server 200 may obtain the first instruction by using the electronic device 300, so that the user can remotely control upgrading of the in-vehicle component, thereby effectively improving user experience.

Implementation 2: When an abnormal operation occurs on the vehicle 100, the vehicle 100 may display a user interface shown in FIG. 5A through a human-machine interface (human machine interface, HMI), obtain a user input (for example, a tap operation of a user for an "OK" button) through the user interface, convert the user input into a first instruction, and send the first instruction to the server 200. The server 200 receives the first instruction. In this way, when an abnormal operation occurs on the vehicle 100 and a software function of the HMI is not faulty, the server 200 may obtain the first instruction by using the vehicle 100, so that the user can control upgrading of the in-vehicle component. The abnormal operation may be, for example, that a quantity of times of door opening and closing or a quantity of times of gear switching exceeds a threshold within a preset time length. This is not specifically limited in this embodiment of this application.

Implementation 3: When determining that the software function of the in-vehicle component is faulty, the server 200 may display a user interface shown in FIG. 5A, obtain a user input (for example, a tap operation of a user for an "OK" button) through the user interface, and convert the user input into a first instruction. In this way, the server 200 can quickly obtain the first instruction, thereby effectively improving upgrade efficiency of the in-vehicle component, and facilitating upgrade control of the in-vehicle component by operation and maintenance management personnel.

In Implementation 1 to Implementation 3, when the software function status of the in-vehicle component is faulty, the user may control upgrading of the in-vehicle component, so that upgrading of the in-vehicle component meets a user requirement. In addition, the user may trigger the server 200 in time to adjust the upgrade strategy, so that the in-vehicle component can still continue to be upgraded when a fault occurs, thereby facilitating normal use of the vehicle 100 by the user.

S402: The server 200 sends task information of an upgrade task in response to the first instruction. Correspondingly, the vehicle 100 receives the task information of the upgrade task.

The task information of the upgrade task may include information about the upgrade strategy, and the information about the upgrade strategy is used to indicate the in-vehicle component to be upgraded. Optionally, the task information may further include an identifier (for example, an ECU identifier) of an in-vehicle component and a uniform resource locator (uniform resource locator, URL) of an upgrade package.

In a possible implementation, the information about the upgrade strategy may include a preset condition, and the preset condition may be used by the in-vehicle component to omit a pre-upgrade processing procedure or used by the in-vehicle component to directly enter an upgrade state. In this way, a preset condition is set in the information about the upgrade strategy. The preset condition may be used by the in-vehicle component to omit a pre-upgrade processing procedure or used by the in-vehicle component to directly enter an upgrade state, so that the upgrade strategy can be flexibly set. In this way, the in-vehicle component can still continue an upgrade task when a software function is faulty.

It may be understood that a processing procedure before the in-vehicle component is upgraded includes but is not limited to: a signal control procedure, a procedure of checking mutex, and a procedure of checking a vehicle state. The signal control procedure may be, for example, at least one of settings of a power-on wake-up signal (KL15) of the in-vehicle component, a CAN network wake-up signal, and a high-voltage signal of the vehicle. The procedure of checking mutex may be, for example, a conflict check of an in-vehicle service. The procedure of checking a vehicle state may be, for example, a check of allowing refreshing flags by the vehicle and a check of a vehicle upgrade state. "The in-vehicle component directly enters an upgrade state" may be understood as that the in-vehicle component omits a pre-upgrade processing procedure of the in-vehicle component, and directly enters a state of executing the upgrade task.

Because the upgrade strategy is related to the software function of the in-vehicle component, the preset condition is related to a software function fault condition of the in-vehicle component. Correspondingly, different software function fault conditions correspond to different preset conditions.

Example 1: Software functions of the PEPS, the BMS, the MCU, and the PDU are all faulty. A KL15 signal (for example, a CAN network wake-up signal and a power-on wake-up signal) control function is used as an example of the software function of the PEPS, and high-voltage signal setting functions are used as an example of the software functions of the BMS, the MCU, and the PDU. In this case, the preset condition is that a procedure of detecting a signal control result of the in-vehicle component, a procedure of checking mutex (for example, a conflict check of an in-vehicle service), and a procedure of checking a vehicle state (for example, a check of allowing refreshing flags by the vehicle and a check of a vehicle upgrade state) are omitted. Correspondingly, an upgrade strategy corresponding to the preset condition may be shown in Table 1. In the upgrade strategy, a KL15 wake-up result, an execution result of pulling a high-voltage signal, an execution result of entering an upgrade mode by a vehicle domain or each domain, an execution result of allowing refreshing flags, and an execution result of checking mutex conditions (for example, a battery voltage is insufficient, or an in-vehicle diagnostic device is not removed) may be ignored.

**Table 1**

| Name | Meaning | Type | Optional or not | Remarks |
|---|---|---|---|---|
| ignore_kl15_rsp | Ignore a KL15 execution result | uint32 | Optional | Whether to ignore a KL15 wake-up result: 1-ignore |
| ignore_high_voltage_rsp | Ignore an execution result of pulling a high-voltage signal | uint32 | Optional | Whether to ignore the execution result of pulling the high-voltage signal: 1-ignore |
| ignore_ota_mode_rsp | Ignore an execution result of entering an upgrade mode | uint32 | Optional | Whether to ignore the execution result of entering the upgrade mode: 1-ignore |
| ignore_refresh_flag_rsp | Ignore an execution result of allowing refreshing flags | uint32 | Optional | Whether to ignore the execution result of allowing refreshing flags: 1 -ignore |
| ignore_mutex_check_rsp | Ignore an execution result of checking mutex | uint32 | Optional | Whether to ignore an execution result of checking mutex conditions: 1-ignore |

Example 2: A software function of the PEPS is faulty, and a software function of any in-vehicle component of the BMS, the MCU, and the PDU is faulty. A KL15 signal (for example, a CAN network wake-up signal and a power-on wake-up signal) control function is used as an example of the software function of the PEPS, and a high-voltage signal setting function is used as an example of the software function of the any in-vehicle component of the BMS, the MCU, and the PDU. In this case, the preset condition is that a procedure of detecting a signal control result of the in-vehicle component, a procedure of checking mutex (for example, a conflict check of an in-vehicle service), and a procedure of checking a vehicle state (for example, a check of allowing refreshing flags by the vehicle and a check of a vehicle upgrade state) are omitted. Correspondingly, an upgrade strategy corresponding to the preset condition may be shown in Table 2. In the upgrade strategy, a KL15 wake-up result, an execution result of pulling a high-voltage signal, an execution result of entering an upgrade mode by a vehicle domain or each domain, an execution result of allowing refreshing flags, and an execution result of checking mutex conditions (for example, a battery voltage is insufficient, or an in-vehicle diagnostic device is not removed) are ignored.

**Table 2**

| Name | Meaning | Type | Optional or not | Remarks |
|---|---|---|---|---|
| ignore_kl15_rsp | Ignore a KL15 execution result | uint32 | Optional | Whether to ignore a KL15 wake-up result: 1-ignore |
| ignore_high_voltage_rsp | Ignore an execution result of pulling a high-voltage signal | uint32 | Optional | Whether to ignore the execution result of pulling the high-voltage signal: 1-ignore |
| ignore_ota_mode_rsp | Ignore an execution result of entering an upgrade mode | uint32 | Optional | Whether to ignore the execution result of entering the upgrade mode: 1-ignore |
| ignore_refresh_flag_rsp | Ignore an execution result of allowing refreshing flags | uint32 | Optional | Whether to ignore the execution result of allowing refreshing flags: 1 -ignore |
| ignore_mutex_check_rsp | Ignore an execution result of checking mutex | uint32 | Optional | Whether to ignore an execution result of checking mutex conditions: 1-ignore |

Example 3: A software function of the PEPS is faulty, and a KL15 signal (for example, a CAN network wake-up signal and a power-on wake-up signal) control function is used as an example of the software function of the PEPS. In this case, the preset condition is that a procedure of detecting a signal control result of the in-vehicle component, a procedure of checking mutex (for example, a conflict check of an in-vehicle service), and a procedure of checking a vehicle state (for example, a check of allowing refreshing flags by the vehicle and a check of a vehicle upgrade state) are omitted. Correspondingly, an upgrade strategy corresponding to the preset condition may be shown in Table 3. In the upgrade strategy, a KL15 wake-up result, an execution result of entering an upgrade mode by a vehicle domain or each domain, an execution result of allowing refreshing flags, and an execution result of checking mutex conditions (for example, a battery voltage is insufficient, or an in-vehicle diagnostic device is not removed) are ignored.

**Table 3**

| Name | Meaning | Type | Optional or not | Remarks |
|---|---|---|---|---|
| ignore_kl15_rsp | Ignore a KL15 execution result | uint32 | Optional | Whether to ignore a KL15 wake-up result: 1-ignore |
| ignore_ota_mode_rsp | Ignore an execution result of entering an upgrade mode | uint32 | Optional | Whether to ignore the execution result of entering the upgrade mode: 1-ignore |
| ignore_refresh_flag_rsp | Ignore an execution result of allowing refreshing flags | uint32 | Optional | Whether to ignore the execution result of allowing refreshing flags: 1 -ignore |
| ignore_mutex_check_rsp | Ignore an execution result of checking mutex | uint32 | Optional | Whether to ignore an execution result of checking mutex conditions: 1-ignore |

Example 4: A software function of any component of the BMS, the MCU, and PDU is faulty, and a high-voltage signal setting function is used as an example of the software function of the any component of the BMS, the MCU, and the PDU. In this case, the preset condition is that a procedure of detecting a signal control result of the in-vehicle component, a procedure of checking mutex (for example, a conflict check of an in-vehicle service), and a procedure of checking a vehicle state (for example, a check of allowing refreshing flags by the vehicle and a check of a vehicle upgrade state) are omitted. Correspondingly, an upgrade strategy corresponding to the preset condition may be shown in Table 4. In the upgrade strategy, an execution result of pulling a high-voltage signal, an execution result of entering an upgrade mode by a vehicle domain or each domain, an execution result of allowing refreshing flags, and an execution result of checking mutex conditions (for example, a battery voltage is insufficient, or an in-vehicle diagnostic device is not removed) are ignored.

**Table 4**

| Name | Meaning | Type | Optional or not | Remarks |
|---|---|---|---|---|
| ignore_high_voltage_rsp | Ignore an execution result of pulling a high-voltage signal | uint32 | Optional | Whether to ignore the execution result of pulling the high-voltage signal: 1-ignore |
| ignore_ota_mode_rsp | Ignore an execution result of entering an upgrade mode | uint32 | Optional | Whether to ignore the execution result of entering the upgrade mode: 1-ignore |
| ignore_refresh_flag_rsp | Ignore an execution result of allowing refreshing flags | uint32 | Optional | Whether to ignore the execution result of allowing refreshing flags: 1 -ignore |
| ignore_mutex_check_rsp | Ignore an execution result of checking mutex | uint32 | Optional | Whether to ignore an execution result of checking mutex conditions: 1-ignore |

To reduce impact of a misoperation of the user on upgrading of the in-vehicle component and make upgrading of the in-vehicle component meet a user requirement, in a possible implementation, before the server sends the task information of the upgrade task, risk warning information may be displayed to the user, so that the user confirms a corresponding operation or the user performs a corresponding operation. The risk warning information may be displayed on a user interface adapted to the server 200, or may be displayed through the electronic device 200, or may be displayed on an HMI of the vehicle 100. This is not specifically limited in this embodiment of this application.

Example 1: The server 200 displays the risk warning information, and obtains a first operation of the user for the risk warning information. If the first operation indicates that the user allows the server 200 to deliver the task information of the upgrade task, the server 200 delivers the task information of the upgrade task. In Example 1, the server 200 may quickly obtain permission information of the user for the task information of the upgrade task, so that efficiency of delivering the task information of the upgrade task can be improved, thereby effectively improving upgrade efficiency of the in-vehicle component.

Example 2: The electronic device 300 displays the risk warning information, and obtains a first operation of the user for the risk warning information. If the first operation is used to indicate that the user allows the server 200 to deliver the task information of the upgrade task, the first operation is converted into a corresponding instruction, and the instruction is sent to the server 200, so that the server 200 delivers the task information of the upgrade task. In this way, it is convenient for the user to remotely control an upgrade process of the in-vehicle component.

Example 3: A software function of the HMI of the vehicle 100 is not faulty, the risk warning information may be displayed through the HMI of the vehicle 100, and a first operation of the user for the risk warning information is obtained. If the first operation indicates that the user allows the server 200 to deliver the task information of the upgrade task, the first operation is converted into a corresponding instruction, and the instruction is sent to the server 200, so that the server 200 delivers the task information of the upgrade task. In this way, it is convenient for the user to control an upgrade process of the in-vehicle component by using the vehicle 100.

In a possible implementation, the risk warning information may be used to indicate a second operation, and the second operation includes but is not limited to at least one of the following: determining that a vehicle is in a stopped state; determining that the vehicle is in a secure area; determining that the vehicle is in an uncharged state; determining that a door of the vehicle is in a closed state; and determining that an in-vehicle diagnostic device of the vehicle has been removed. The second operation may be implemented by the user or the vehicle 100. This is not specifically limited in this embodiment of this application. In this implementation, the risk warning information may be used to indicate the user or the vehicle to perform a corresponding operation, to ensure security of upgrading of the in-vehicle component. For example, as shown in FIG. 5B, the risk warning information is "Please determine that the vehicle is in a stopped state and in a secure area, determine that the vehicle is in an uncharged state, and determine that a door of the vehicle is closed and an in-vehicle diagnostic device has been removed". The server 200, the vehicle 100, and the electronic device 300 may all display the risk warning information, and detect a tap operation (namely, the first operation) of the user for an "OK" button. In this case, it may be determined that the user allows the server 200 to deliver the task information of the upgrade task.

To further improve security of upgrading of the in-vehicle component, before the permission information of the user for the upgrade task is obtained, the server 200 may further perform identity authentication on the user. For example, the server 200 may obtain user information by using the electronic device 300 or the HMI of the vehicle 100, and compare the obtained user information with pre-stored user information associated with the vehicle 100, to perform user identity verification. The user information may include but is not limited to face information, voiceprint information, and iris information of the user.

S403: The vehicle 100 upgrades the in-vehicle component based on the information about the upgrade strategy.

In a possible implementation, before the vehicle 100 upgrades the in-vehicle component, the server 200 may further send a second instruction to the vehicle 100. The second instruction may be used to indicate to check a speed and a gear state of the vehicle 100. Correspondingly, the vehicle 100 receives the second instruction, and checks the speed and the gear state of the vehicle 100 in response to the second instruction. When it is determined that the speed and the gear state of the vehicle 100 meet an upgrade condition (for example, the speed is zero and the gear is a P gear), the in-vehicle component is upgraded. In this way, the vehicle 100 can check the speed and the gear state, so that upgrading of the in-vehicle component is performed while user safety is ensured, thereby effectively improving security of upgrading of the in-vehicle component.

In a possible implementation, the server 200 may further obtain a third instruction. If the third instruction is used to indicate that the user allows the server 200 to deliver an upgrade package corresponding to the upgrade task, the server 200 sends the upgrade package to the vehicle 100. In this way, the user can determine whether the in-vehicle component is upgraded by using a local upgrade package of the in-vehicle component, or is upgraded by using the upgrade package delivered by the server 200. In this way, upgrading of the in-vehicle component further meets the user requirement.

The vehicle 100 upgrades the in-vehicle component based on the information about the upgrade strategy in a plurality of implementations, including but not limited to the following:

Implementation 1: The vehicle 100 receives an upgrade package corresponding to the upgrade task, and upgrades the in-vehicle component based on the information about the upgrade strategy and the upgrade package. In this way, timeliness of updating the software function of the in-vehicle component can be effectively improved.

Implementation 2: The vehicle 100 upgrades the in-vehicle component based on the information about the upgrade strategy and a local upgrade package of the vehicle 100. In this way, upgrade efficiency of the in-vehicle component can be effectively improved, so that the vehicle 100 can be restored to a normal use state more quickly, thereby facilitating normal use of the vehicle 100 by the user.

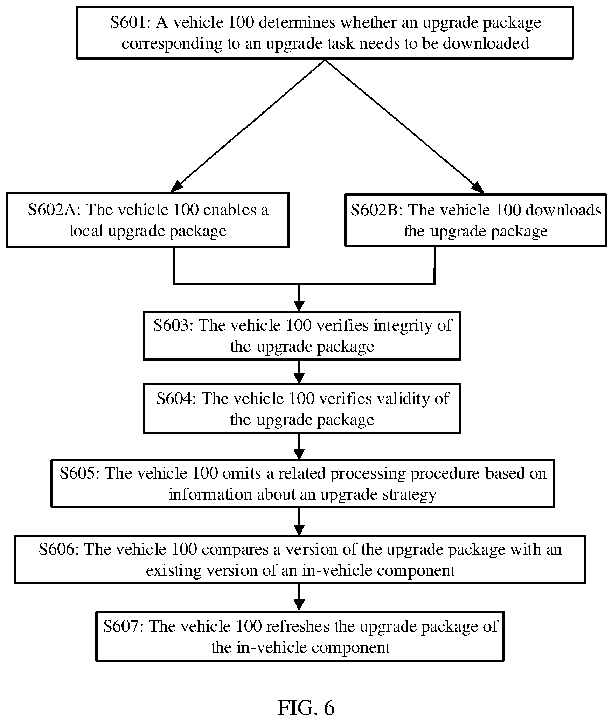

For example, during specific implementation, refer to FIG. 6. S403 may include the following steps.

S601: The vehicle 100 determines whether an upgrade package corresponding to the upgrade task needs to be downloaded.

For example, the vehicle 100 queries whether the upgrade package exists locally. If the upgrade package exists locally, S602 D is performed; or if the upgrade package does not exist locally, S602B is performed.

S602A: The vehicle 100 loads the local upgrade package.

S602B: The vehicle 100 downloads the upgrade package.

For example, the task information of the upgrade task includes a URL of the upgrade package, and the vehicle 100 may download the upgrade package from the URL.

S603: The vehicle 100 verifies integrity of the upgrade package.

It should be understood that the vehicle 100 performs S604 after verifying the integrity of the upgrade package.

S604: The vehicle 100 verifies validity of the upgrade package.

It should be understood that the vehicle 100 performs S605 after verifying the integrity of the upgrade package.

S605: The vehicle 100 omits a related processing procedure based on the information about the upgrade strategy.

It may be understood that "omitting a related processing procedure" may be that a related processing procedure is not performed, or a related processing procedure is performed, but a result of the processing procedure is ignored.

For example, the preset condition in the information about the upgrade strategy indicates that a related processing procedure that is omitted may include a signal control procedure, a procedure of checking mutex, and a procedure of checking a vehicle state. The signal control procedure may be, for example, at least one of settings of a power-on wake-up signal (KL15) of the in-vehicle component, a CAN network wake-up signal, and a high-voltage signal of the vehicle. The procedure of checking mutex may be, for example, a conflict check of an in-vehicle service. The procedure of checking a vehicle state may be, for example, a check of allowing refreshing flags by the vehicle and a check of a vehicle upgrade state. To be specific, in S605, the vehicle 100 may skip the procedure of detecting the signal control result of the in-vehicle component, the procedure of checking mutex, and the procedure of checking the vehicle state. Alternatively, the vehicle 100 may perform the procedure of detecting the signal control result of the in-vehicle component, the procedure of checking mutex, and the procedure of checking the vehicle state, but ignore a processing result of the related procedure. For example, a KL15 wake-up result, an execution result of pulling a high-voltage signal, an execution result of entering an upgrade mode by a vehicle domain or each domain, an execution result of allowing refreshing flags, and an execution result of checking mutex conditions (for example, a battery voltage is insufficient, or an in-vehicle diagnostic device is not removed) are ignored.

S606: The vehicle 100 compares a version of the upgrade package with an existing version of the in-vehicle component.

It should be understood that the vehicle 100 needs to compare the version of the upgrade package with the existing version of the in-vehicle component, to determine whether the in-vehicle component needs to be upgraded. After determining that the in-vehicle component needs to be upgraded, the vehicle 100 performs S607 to upgrade the in-vehicle component.

S607: The vehicle 100 refreshes the upgrade package of the in-vehicle component.

It should be understood that the vehicle 100 refreshes the upgrade package of the in-vehicle component, so that the in-vehicle component is upgraded.

In the embodiment shown in FIG. 4, the software function status of the in-vehicle component is associated with the upgrade strategy, so that the server 200 may adjust the upgrade strategy of the in-vehicle component based on the software function status of the in-vehicle component. For example, when a software function (for example, a communication function or a vehicle speed detection function) related to a security requirement of the vehicle 100 runs normally, impact of faults of some software functions (for example, a vehicle high-voltage signal setting function or a flag status setting function) of the in-vehicle component that do not relate to a security requirement on an upgrade process of the in-vehicle component is ignored. In this way, the in-vehicle component can still continue to be upgraded when the software function is faulty, security and reliability of upgrading of the in-vehicle component are effectively improved, and unavailability of the vehicle 100 can be reduced, thereby facilitating normal use of the vehicle 100 by the user.

In this embodiment of this application, to improve security and reliability of upgrading of the in-vehicle component, a corresponding security mechanism is further set in this embodiment of this application. The security mechanism includes but is not limited to the following implementations:

Implementation 1: The server 200 may further sign the task information of the upgrade task based on a first certificate of the vehicle 100, to obtain the signed task information, and then send the signed task information to the vehicle 100. The signed task information may be used to verify security of the task information. In this way, the vehicle 100 may verify signed information carried in the signed task information after receiving the signed task information. The vehicle 100 may sign the task information of the upgrade task based on a signature algorithm. The signature algorithm may be, for example, any one of MD5, SHA-1, SHA-256, and HMAC-SHA256. This is not specifically limited in this embodiment of this application.

It may be understood that the first certificate may be a certificate issued by a certificate authority to the vehicle 100, and is used to uniquely identify a legal identity of the vehicle 100. The first certificate may be preconfigured in the server 200, or may be requested by the server 200 from the certificate authority. This is not limited in this embodiment of this application.

Implementation 2: The server 200 may send the task information of the upgrade task by using a data transport layer security (datagram transport layer security, DTLS) channel.

The foregoing implementations may be implemented separately, or may be implemented in combination.

Similarly, to improve security of the upgrade package corresponding to the upgrade task, the server 200 may further sign the upgrade package based on a second certificate of the vehicle 100 to obtain the signed upgrade package, and send the signed upgrade package. The second certificate may be a package dedicated certificate, and the package dedicated certificate may be a certificate issued by the certificate authority to a supplier of the upgrade package.

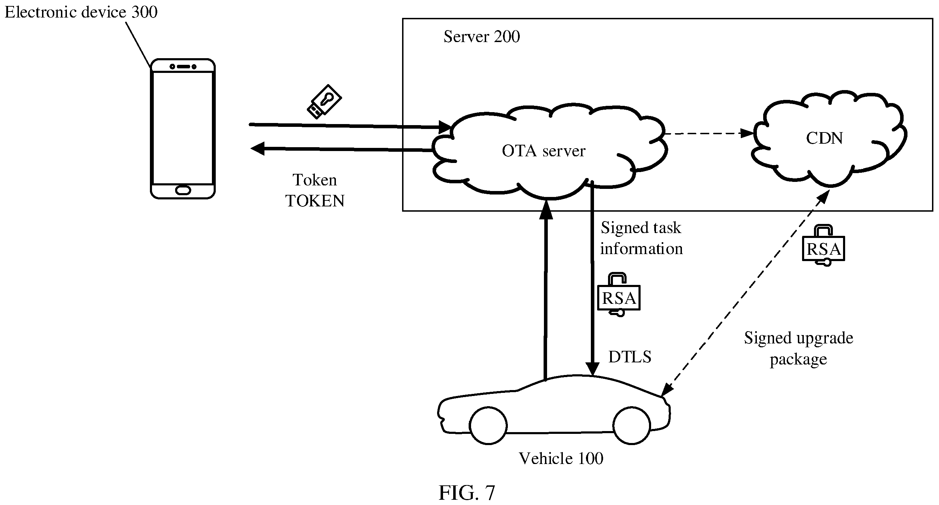

For example, FIG. 7 is a schematic diagram of a secure interaction scenario to which an embodiment of this application is applicable. A mobile phone is used as an example of the electronic device 300, and the server 200 includes an OTA server and a content delivery network (content delivery network, CDN).

The OTA server may allocate a token (TOKEN) to the mobile phone to uniquely identify identity validity of the mobile phone, so that information interaction between the mobile phone and the OTA is authenticated based on the token, thereby effectively improving security of communication between the mobile phone and the OTA server.

In a possible implementation, the OTA server may receive a first user instruction from the mobile phone, create a corresponding upgrade task based on the first user instruction, sign the task information of the upgrade task by using an RSA algorithm, and deliver the signed task information to the vehicle 100 through the DTLS channel. In this way, the vehicle 100 may verify a signature of the task information, to ensure accuracy of the task information.

Optionally, the OTA server receives, from the mobile phone, a second user instruction that indicates to deliver the upgrade package, and forwards the second user instruction to the CDN. After signing the upgrade package by using the RSA algorithm, the CDN sends the upgrade package to the vehicle 100. In this way, the vehicle 100 can verify a signature of the upgrade package, to effectively ensure accuracy of the upgrade package.

For ease of understanding, with reference to specific accompanying drawings, the following describes implementation details of interaction between the vehicle 100 and the server 200 to upgrade the in-vehicle component in this embodiment of this application.

For example, refer to FIG. 8A-1, FIG. 8A-2, FIG. 8B-1, and FIG. 8B-2. A process of the vehicle 100 and the server 200 interacting with each other to upgrade the in-vehicle component includes: a task delivery phase, an upgrade package download phase, an upgrade confirmation phase, a pre-upgrade processing phase, an upgrade phase, an activation phase, and a post-upgrade processing phase.

The task delivery phase includes the following steps.

S801: The server 200 sends wake-up information to the vehicle 100. Correspondingly, the vehicle 100 receives the wake-up information.

For example, the wake-up information may be short-message information.

S802: The vehicle 100 starts a not-to-sleep mode.

It should be understood that starting the not-to-sleep mode by the vehicle 100 may be forbidding an upgrade device (for example, a T-BOX) from being in a sleep state.

S803: The vehicle 100 sends a registration request to the server 200. Correspondingly, the server 200 receives the registration request.

For example, the registration request may carry identification information (for example, a vehicle identification number, VIN) of the vehicle 100, so that the server 200 may complete registration of the vehicle 100 based on the VIN of the vehicle 100 after receiving the registration request.

S804: The server 200 sends task information of an upgrade task. Correspondingly, the vehicle 100 receives the task information.

S805: The vehicle 100 verifies the task information.

For example, the vehicle 100 may verify whether a signature of the task information is valid and whether the task information is integral. When it is determined that the signature of the task information is valid and the task information is integral, the vehicle 100 performs S806.

S806: The vehicle 100 sends response information. Correspondingly, the server 200 receives the response information.

It should be understood that the response information may be used to indicate that the vehicle 100 has successfully received the task information of the upgrade task, and when the response information indicates that the vehicle 100 has successfully received the task information of the upgrade task, the vehicle 100 performs S807.

The upgrade package download phase includes the following steps.

S807: The vehicle 100 checks vehicle signal control.

It should be understood that, if a vehicle signal control function of the in-vehicle component is faulty, and information about an upgrade strategy in upgrade information of the upgrade task is to omit a procedure of checking vehicle signal control, the vehicle 100 performs S807, but ignores a check result of vehicle signal control, and continues to perform S808. For example, a vehicle signal control function of the in-vehicle component is faulty, and consequently the in-vehicle component fails to set an MDC wake-up signal, a vehicle high-voltage signal, and a vehicle CAN network wake-up signal. The vehicle 100 checks the MDC wake-up signal, the vehicle high-voltage signal, and the vehicle CAN network wake-up signal, and finds that the MDC wake-up signal, the vehicle high-voltage signal, and the vehicle CAN network wake-up signal do not exist. However, the vehicle 100 ignores a check result of a vehicle signal, and continues to perform S808. In this way, when a software function of the in-vehicle component is faulty, an upgrade process of the in-vehicle component can still be continued.

S808: The vehicle 100 downloads an upgrade package.

For example, the vehicle 100 downloads the upgrade package based on a URL in the task information of the upgrade task.

S809: The vehicle 100 reports a task status to the server 200.

It should be understood that the "task status" may refer to an upgrade phase of the upgrade task.

S810: The vehicle 100 verifies the upgrade package.

For example, the vehicle 100 verifies validity and integrity of the upgrade package, and performs S811 after successful verification.

The upgrade confirmation phase includes the following step.

S811: The server 200 sends user permission information. Correspondingly, the vehicle 100 receives the user permission information.

It should be understood that when determining that the user agrees to upgrade the in-vehicle component, the server 200 may send corresponding user permission information to the vehicle 100, so that the vehicle 100 upgrades the in-vehicle component.

The pre-upgrade processing phase includes the following steps.

S812: The vehicle 100 performs a mutex check.

It should be understood that, if the information about the upgrade strategy in the upgrade information of the upgrade task is to omit a procedure of checking mutex, the vehicle 100 performs S812, but ignores a mutex check result, and continues to perform S813. For example, the mutex check result may be that a battery voltage is insufficient and/or an in-vehicle diagnostic device is not removed, and the vehicle 100 ignores the mutex check result and continues to perform S813, so that an upgrade process of the in-vehicle component may continue.

S813: The vehicle 100 checks vehicle signal control.

Similarly, in the pre-upgrade processing phase, the vehicle 100 also needs to check vehicle signal control. If the information about the upgrade strategy in the upgrade information of the upgrade task is to omit a procedure of checking vehicle signal control, the vehicle 100 performs S813, but ignores a check result of vehicle signal control, and continues to perform S814.

S814: The vehicle 100 performs a security check.

For example, a process in which the vehicle 100 may perform a security check may be: a speed check, a gear check, a charging gun state check, a power battery check, and a parking brake state check, to ensure that the vehicle 100 is in a stopped state and an uncharged state. In this way, security of upgrading the in-vehicle component can be improved.

S815: The vehicle 100 reports a task status to the server 200.

Similarly, in the pre-upgrade processing phase, the vehicle 100 also reports the task status of the upgrade task to the server 200.

S816: The vehicle 100 compares a current version of the in-vehicle component with a version of the upgrade package.

It should be understood that when determining that the current version of the in-vehicle component is different from the version of the upgrade package, the vehicle 100 performs S817 to S822.

The upgrade phase includes the following steps.

S817: The vehicle 100 checks vehicle signal control.

Similarly, in the upgrade phase, the vehicle 100 also needs to check vehicle signal control. If the information about the upgrade strategy in the upgrade information of the upgrade task is to omit a procedure of checking vehicle signal control, the vehicle 100 performs S817, but ignores a check result of vehicle signal control, and continues to perform S818.

S818: The vehicle 100 performs a security check.

A specific implementation of S818 is the same as that of S814. For details, refer to related descriptions of S814.

S819: The vehicle 100 notifies a vehicle control unit (vehicle control unit, VCU) to enter an upgrade mode.

It should be understood that if the information about the upgrade strategy in the upgrade information of the upgrade task is to omit a procedure of checking a vehicle state, and the procedure of checking a vehicle state is a check of a vehicle upgrade state, the vehicle 100 performs S819, but ignores a check result of a vehicle upgrade state, for example, ignores a result of entering the upgrade mode by the VCU, and continues to perform S820.

S820: The vehicle 100 notifies each domain to enter an upgrade mode.

Similarly, if the information about the upgrade strategy in the upgrade information of the upgrade task is to omit a procedure of checking a vehicle state, and the procedure of checking a vehicle state is a check of a vehicle upgrade state, the vehicle 100 performs S820, but ignores a check result of a vehicle upgrade state, for example, ignores a result of entering the upgrade mode by each domain, and continues to perform S821.

S821: The vehicle 100 reports a task status to the server 200.

Similarly, in the upgrade phase, the vehicle 100 also reports the task status of the upgrade task to the server 200.

S822: The vehicle 100 refreshes the upgrade package of the in-vehicle component.

It should be understood that a process of the vehicle 100 refreshing the upgrade package of the in-vehicle component is a process of refreshing program code corresponding to the upgrade package.

The activation phase includes, for example, a check of allowing refreshing flags by the vehicle and a check of a vehicle upgrade state.

S823: The vehicle 100 checks vehicle signal control.

Similarly, in the upgrade phase, the vehicle 100 also needs to check vehicle signal control. If the information about the upgrade strategy in the upgrade information of the upgrade task is to omit a procedure of checking vehicle signal control, the vehicle 100 performs S823, but ignores a check result of vehicle signal control, and continues to perform S824.

S824: The vehicle 100 reports a task status to the server 200.

Similarly, in the upgrade phase, the vehicle 100 also reports the task status of the upgrade task to the server 200.

S825: The vehicle 100 activates a software function of the in-vehicle component.

It should be understood that, after the vehicle 100 completes refreshing the upgrade package of the in-vehicle component, the vehicle 100 may activate the software function of the in-vehicle component.

The post-upgrade processing phase includes the following steps.

S826: The vehicle 100 controls the in-vehicle component to set a vehicle signal.

It should be understood that, after the software function of the in-vehicle component is activated, the vehicle 100 may control the in-vehicle component to set the vehicle signal, for example, a vehicle high-voltage signal and a vehicle CAN network wake-up signal.

S827: The vehicle 100 notifies each domain to exit the upgrade mode.

S828: The vehicle 100 collects current version information of the in-vehicle component.

It should be understood that the vehicle 100 collects the current version information of the in-vehicle component, to facilitate management of upgrading of the in-vehicle component.

S829: The vehicle 100 collects a task log.

It should be understood that the task log is a log recording an execution process of the upgrade task, and the log may include abnormality information in a process of the in-vehicle component implementing the current upgrade task, so that the vehicle 100 can optimize a subsequent upgrade process of the in-vehicle component based on the log.

S830: The vehicle 100 notifies the VCU to exit the upgrade mode.

It should be understood that a process of the vehicle 100 and the server 200 interacting with each other to upgrade the in-vehicle component shown in FIG. 8A-1, FIG. 8A-2,

FIG. 8B-1, and FIG. 8B-2 is a refinement of the upgrade method shown in FIG. 4, and technical effects achieved are the same as those of the upgrade method shown in FIG. 4. To be specific, when a software function of the in-vehicle component is faulty, some processing results are ignored, so that the upgrade process of the in-vehicle component can be performed continuously, security and reliability of upgrading of the in-vehicle component are effectively improved, and unavailability of the vehicle 100 can be reduced, thereby facilitating normal use of the vehicle 100 by the user.

The following describes an apparatus in an embodiment of this application with reference to accompanying drawings.

FIG. 9 is a possible schematic diagram of a structure of an upgrade apparatus according to the foregoing embodiment of this application. The apparatus 900 may be configured to implement the method performed by the server 200 in the embodiment shown in FIG. 4. The apparatus 900 may be a server, or a chip or an integrated circuit in a server. This is not specifically limited in this embodiment of this application.

For example, the apparatus 900 may include:
a processing module 901, configured to obtain a first instruction when a software function of an in-vehicle component is faulty, where the first instruction is used to indicate an upgrade strategy of the in-vehicle component, and the upgrade strategy is associated with a software function status of the in-vehicle component; and
a transceiver module 902, configured to send task information of an upgrade task in response to the first instruction, where the task information includes information about the upgrade strategy, and the information about the upgrade strategy is used to indicate the in-vehicle component to be upgraded.

The information about the upgrade strategy includes a preset condition, and the preset condition is used by the in-vehicle component to omit a pre-upgrade processing procedure or used by the in-vehicle component to directly enter an upgrade state.

In a possible design, the transceiver module 902 may be further configured to send a second instruction. The second instruction is used to indicate to check a speed and a gear state of a vehicle.

Optionally, the apparatus may further include a display module 903. Before the transceiver module 902 sends the task information of the upgrade task, the display module 903 may display risk warning information. The processing module 901 may further obtain a first operation of a user for the risk warning information. The first operation is used to indicate that the user allows the server to deliver the task information of the upgrade task.

The first instruction is determined based on a user input.

Optionally, the processing module 901 may further obtain a third instruction. The third instruction is used to indicate that the user allows the server to deliver an upgrade package corresponding to the upgrade task. The transceiver module 902 may be further configured to send the upgrade package to the vehicle.

Optionally, the processing module 901 may further sign the task information of the upgrade task based on a first certificate of the vehicle, to obtain the signed task information. The signed task information may be used to verify security of the task information.

FIG. 10 is a possible schematic diagram of a structure of another upgrade apparatus according to the foregoing embodiment of this application. The apparatus 1000 may be configured to implement the method performed by the vehicle 100 in the embodiment shown in FIG. 4. The apparatus 1000 may be a vehicle, or a chip or an integrated circuit in a vehicle. This is not specifically limited in this embodiment of this application.

For example, the apparatus 1000 may include:
a transceiver module 1001, configured to receive task information of an upgrade task, where the task information includes information about an upgrade strategy, and the information about the upgrade strategy is associated with a software function status of an in-vehicle component; and a processing module 1002, configured to upgrade the in-vehicle component based on the information about the upgrade strategy.

The information about the upgrade strategy includes a preset condition, and the preset condition is used by the in-vehicle component to omit a pre-upgrade processing procedure or used by the in-vehicle component to directly enter an upgrade state.

Optionally, the transceiver module 1001 may further receive a second instruction. The second instruction is used to indicate to check a speed and a gear state of the vehicle.

Optionally, the transceiver module 1001 may be further configured to receive an upgrade package corresponding to the upgrade task. The processing module 1002 may be further configured to upgrade the in-vehicle component based on the information about the upgrade strategy and the upgrade package.

Optionally, the processing module 1002 may further upgrade the in-vehicle component based on the information about the upgrade strategy and a local upgrade package of the vehicle.

Optionally, the processing module 1002 may be further configured to verify a signature of the task information based on a first certificate of the vehicle, and upgrade the in-vehicle component based on the information about the upgrade strategy only when it is determined that signature verification of the task information is successful.

An embodiment of this application further provides an electronic device. The electronic device may be configured to implement the upgrade method performed by the electronic device 300. For example, the electronic device includes: a display module, configured to display risk warning information; and an obtaining module, configured to obtain a first operation of a user for the risk warning information. The first operation is used to indicate that the user allows a cloud to deliver task information of an upgrade task. The risk warning information is used to indicate a second operation, and the second operation includes at least one of the following: determining that a vehicle is in a stopped state; determining that the vehicle is in a secure area; determining that the vehicle is in an uncharged state; determining that a door of the vehicle is in a closed state; and determining that an in-vehicle diagnostic device of the vehicle has been removed.

An embodiment of this application further provides a vehicle. The vehicle may include a processor. The processor is configured to perform the method performed by the vehicle 100 in the embodiment shown in FIG. 4.

In a possible implementation, the vehicle further includes a memory, which is configured to store a computer program or instructions.

In a possible implementation, the vehicle further includes a transceiver, which is configured to receive or send information.

An embodiment of this application further provides a server. The server includes a processor, and the processor is configured to perform the method performed by the server in the embodiment shown in FIG. 4.

Optionally, the server further includes a memory, which is configured to store a computer program or instructions.

Optionally, the server further includes a transceiver, which is configured to receive or send information.

In a possible implementation, the foregoing server is a single server or a server cluster including a plurality of sub-servers. When the server is the server cluster including the plurality of sub-servers, the plurality of sub-servers jointly perform the foregoing upgrade method.

An embodiment of this application further provides a chip system. Refer to FIG. 11. The chip system 1100 includes at least one processor. When program instructions are executed in the at least one processor 1101, the upgrade method in the foregoing embodiment is implemented.

Optionally, the chip system further includes a communication interface 1103, and the communication interface is configured to input or output information.

Optionally, the chip system further includes a memory 1102. The memory 1102 is coupled to the processor by using the communication interface 1103, and is configured to store the foregoing instructions, so that the processor reads, through the communication interface 1103, the instructions stored in the memory.

It should be understood that a connection medium between the processor 1101, the memory 1102, and the communication interface 1103 is not limited in this embodiment of this application. In this embodiment of this application, the memory 1102, the processor 1101, and the communication interface 1103 are connected through a communication bus 1104 in FIG. 11. The bus is represented by a thick line in FIG. 11, and connections between other components are merely examples for description, and shall not be construed as a limitation. The bus may include an address bus, a data bus, a control bus, and the like. For ease of representation, in FIG. 11, only one thick line is used to represent the bus, but it does not indicate that there is only one bus or only one type of bus or the like.

The module for receiving/sending (the transceiver module) may be an interface circuit of an apparatus, and is configured to receive/send a signal from another apparatus. For example, when the apparatus is implemented in a manner of a chip, the transceiver module is an interface circuit of the chip, configured to receive/send a signal from another chip or apparatus.

An embodiment of this application further provides a computer program product including instructions. When the computer program product runs on the foregoing apparatus, the upgrade method in the foregoing embodiment is performed.

An embodiment of this application provides a computer-readable storage medium. The computer-readable storage medium stores a computer program. When the computer program is run, the upgrade method in the foregoing embodiment is implemented.

For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, function units in embodiments of this application may be integrated into one processing module, or each of the units may exist alone physically, or two or more units are integrated into one unit. The integrated unit may be implemented in a form of hardware, or may be implemented in a form of a software function unit.

In embodiments of this application, module division is an example, and is merely logical function division. In actual implementation, another division manner may be used. In addition, function modules in embodiments of this application may be integrated into one processor, or each of the modules may exist alone physically, or two or more modules are integrated into one module. The integrated module may be implemented in a form of hardware, or may be implemented in a form of a software function module.

All or some of the methods in embodiments of this application may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, when there is no logical conflict, embodiments may be mutually referenced. For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

A person skilled in the art can make various modifications and variations to this application without departing from the scope of this application. This application is intended to cover these modifications and variations of this application provided that they fall within the scope of protection defined by the claims of this application and their equivalent technologies.

## Claims

1. An upgrade method, comprising:
obtaining a first instruction when a software function of an in-vehicle component is faulty, wherein the first instruction is used to indicate an upgrade strategy of the in-vehicle component, and the upgrade strategy is associated with a software function status of the in-vehicle component; and
sending task information of an upgrade task in response to the first instruction, wherein the task information comprises information about the upgrade strategy, and the information about the upgrade strategy is used to indicate the in-vehicle component to be upgraded.

2. The method according to claim 1, wherein the information about the upgrade strategy comprises a preset condition, and the preset condition is used by the in-vehicle component to omit a pre-upgrade processing procedure or is used by the in-vehicle component to directly enter an upgrade state.

3. The method according to claim 1 or 2, wherein the method further comprises:
sending a second instruction, wherein the second instruction is used to indicate to check a speed and a gear state of a vehicle.

4. The method according to any one of claims 1 to 3, wherein before the sending task information of an upgrade task, the method further comprises:
displaying risk warning information; and
obtaining a first operation of a user for the risk warning information, wherein the first operation is used to indicate that the user allows a server to deliver the task information of the upgrade task.

5. The method according to any one of claims 1 to 4, wherein the first instruction is determined based on a user input.

6. The method according to any one of claims 1 to 5, wherein the method further comprises:
obtaining a third instruction, wherein the third instruction is used to indicate that the user allows the server to deliver an upgrade package corresponding to the upgrade task; and
sending the upgrade package to the vehicle.

7. The method according to any one of claims 2 to 6, wherein the method further comprises:
signing the task information of the upgrade task based on a first certificate of the vehicle, to obtain the signed task information, wherein the signed task information is used to verify security of the task information.

8. An upgrade method, comprising:
receiving task information of an upgrade task, wherein the task information comprises information about an upgrade strategy, and the information about the upgrade strategy is associated with a software function status of an in-vehicle component; and
upgrading the in-vehicle component based on the information about the upgrade strategy.

9. The method according to claim 8, wherein the information about the upgrade strategy comprises a preset condition, and the preset condition is used by the in-vehicle component to omit a pre-upgrade processing procedure or is used by the in-vehicle component to directly enter an upgrade state.

10. The method according to claim 8 or 9, wherein the method further comprises:
receiving a second instruction, wherein the second instruction is used to indicate to check a speed and a gear state of a vehicle.

11. The method according to any one of claims 8 to 10, wherein the upgrading the in-vehicle component based on the information about the upgrade strategy comprises:
receive an upgrade package corresponding to the upgrade task; and
upgrading the in-vehicle component based on the information about the upgrade strategy and the upgrade package.

12. The method according to any one of claims 8 to 10, wherein the upgrading the in-vehicle component based on the information about the upgrade strategy comprises:
upgrading the in-vehicle component based on the information about the upgrade strategy and a local upgrade package of the vehicle.

13. The method according to any one of claims 8 to 12, wherein before the upgrading the in-vehicle component based on the information about the upgrade strategy, the method further comprises:
verifying a signature of the task information based on a first certificate of the vehicle; and
determining that signature verification of the task information is successful.

14. An upgrade method, comprising:
displaying risk warning information; and
obtaining a first operation of a user for the risk warning information, wherein the first operation is used to indicate that the user allows a cloud to deliver task information of an upgrade task.

15. The method according to claim 14, wherein the risk warning information is used to indicate a second operation, and the second operation comprises at least one of the following:
determining that a vehicle is in a stopped state;
determining that the vehicle is in a secure area;
determining that the vehicle is in an uncharged state;
determining that a door of the vehicle is in a closed state; and
determining that an in-vehicle diagnostic device of the vehicle has been removed.

16. An upgrade apparatus, comprising:
a processing module, configured to obtain a first instruction when a software function of an in-vehicle component is faulty, wherein the first instruction is used to indicate an upgrade strategy of the in-vehicle component, and the upgrade strategy is associated with a software function status of the in-vehicle component; and
a transceiver module, configured to send task information of the upgrade task in response to the first instruction, wherein the task information comprises information about the upgrade strategy, and the information about the upgrade strategy is used to indicate the in-vehicle component to be upgraded.

17. An upgrade apparatus, comprising:
a transceiver module, configured to receive task information of an upgrade task, wherein the task information comprises information about an upgrade strategy, and the information about the upgrade strategy is associated with a software function status of an in-vehicle component; and
a processing module, configured to upgrade the in-vehicle component based on the information about the upgrade strategy.

18. An electronic device, comprising:
a display module, configured to display risk warning information; and
an obtaining module, configured to obtain a first operation of a user for the risk warning information, wherein the first operation is used to indicate that the user allows a server to deliver task information of an upgrade task.

19. The device according to claim 18, wherein the risk warning information is used to indicate a second operation, and the second operation comprises at least one of the following:
determining that a vehicle is in a stopped state;
determining that the vehicle is in a secure area;
determining that the vehicle is in an uncharged state;
determining that a door of the vehicle is in a closed state; and
determining that an in-vehicle diagnostic device of the vehicle has been removed.

20. A vehicle, comprising a memory and a processor, wherein
the memory is configured to store a computer program; and
the processor is configured to execute the computer program stored in the memory, to implement the method according to any one of claims 8 to 13.

21. □ server, wherein the server comprises a memory and a processor;
the memory is configured to store a computer program; and
the processor is configured to execute the computing program stored in the memory, to implement the method according to any one of claims 1 to 7, or implement the method according to any one of claims 8 to 13, or implement the method according to any one of claims 14 to 15.

22. A computer-readable storage medium, wherein the computer-readable storage medium stores instructions, and when the instructions are run, the method according to any one of claims 1 to 7, 8 to 13, or 14 to 15 is performed.
